# EUROPEAN PATENT APPLICATION

(11) **EP 1 094 264 A1**
(43) Date of publication of application: **25.04.2001**
(21) Application number: 00203612.7
(22) Date of filing: 18.10.2000
(51) Int. Cl.: F16L 3/04, F16L 3/10, F16L 19/00

(54) **Method for the fluidtight connection of a flexible tube with a pipe and a device for carrying out the method**

(30) Priority: 21.10.1999 NL 1013358
(71) Applicant: Emje Management Support B.V., 6093 EG Heythuysen (NL)
(72) Inventor: Rooswinkel, Johannes, 6093 EG Heythuysen (NL)
(74) Representative: Van Weele, Paul Johannes Frits

(57) **Abstract**

A method for the fluidtight connection of a flexible tube (3) with a pipe (5) and the mounting of the tube and/or the pipe on a carrier element (7), comprising:
- the insertion into the tube of an insertable portion of a tube connection organ (15) into a free end of the tube,
- the placing of a tube clamping device around the free end of the tube,
- the clamping of the tube clamping device (9) such that the tube is clamped fluidtight between the tube connection organ and the tube clamping device,
- the coupling of the tube connection organ with the pipe and
- the mounting of the tube on the carrier element,
   and a device for carrying out the method.
Said tube clamping device together with said mounting device forms a combined device having a base part (23) and a clamping part (9) movable in relation thereto. The base part is mounted on the carrier element and the tube is placed on the base part at a position diametrically outward in relation to the previously inserted insertable portion of the tube connection organ, wherein the clamping part is moved in relation to the base part such that the combined device is clamped around the tube to clamp the tube between the insertable portion of the tube connection organ and the clamping part, such as to be fluid-tight.

## Description

The invention relates to a method as described in the preamble of claim 1 and to a device according to the preamble of claim 8.

In practice, methods and devices of this kind are widely used in the field of technology, in particular with hydraulically driven machines in which one or more piston/cylinder assemblies are provided on parts of a machine, moving in relation to other parts of the machine where a hydraulic pump is involved for actuating the piston/cylinder assembly. Examples of such machines may be found in agriculture or in the construction industry where hydraulically driven machines are widely used, for example, for ploughing, digging, lifting, moving soil, etc.. Other examples include pile drivers, machinery aboard ships, etc..

The flexible tubes serve as flexible connecting element between a piston/cylinder assembly and other parts of the machine in relation to which the cylinder/piston assembly moves.

In practice, the tubes are usually coupled with rigid pipes, usually of metal, firmly mounted with the aid of mounting saddles on a carrier element such as a part of a machine, a cable channel, a structural beam, or the like. The mounting saddles usually consist of a first portion resting on the carrier element and provided at the top with a hollow into which the pipe can be placed, and a second portion to be applied over the pipe and mounted in relation to the first portion such that the pipe is secured between the first portion and the second portion. In this way the pipe is firmly fixed in relation to the carrier element. In order to avoid undesirable mechanical stress to the coupling resulting from the movement of the tube, the flexible tube is usually also fixed to the carrier element near its coupled end, such as to prevent the relative displacement of the end of the tube and the end of the pipe facing each other. To couple the tube to the pipe, the tube is provided at its free end facing the pipe with a tube connection organ comprising an insertable portion to be inserted into the tube, after which the tube, with the aid of a tube clamping device, is clamped around the inserted portion to make the connection fluidtight. To fix the tube on the carrier element onto which also the pipe is fixed, substantially the same means are used as for fastening the pipe on the carrier element.

Hydraulic machinery often involves several piston/cylinder assemblies, all of which must be provided with a supply and a discharge of hydraulic oil, so that there is often a considerable number of pipes and tubes present sharing a corresponding number of fluidtight connections as well as a considerable number of mounting means such as mounting saddles for fixing the pipes and at least some of the tubes. This requires a substantial number of parts and many operational actions to realize the mounting.

It is the object of the invention to provide a method of the kind mentioned in the introduction by which the number of mounting actions is reduced, and to provide a device of the kind mentioned in the introduction reducing the number of parts that are required. To this end the method according to the invention is characterized by the features mentioned in the characterizing part of claim 1, and the device according to the invention is characterized in that the same forms a combined device according to the introductory part of claim 8, which is characterized by the measures reported in the characterizing part of claim 8.

The essential element of the invention is that a tube connection organ is combined with a mounting device for mounting a tube on a carrier element. This allows the fluidtight clamping of the tube connection organ in the tube and the mounting of the tube on the carrier elements to be performed as one operation, while the tube clamping device and the mounting device form a combined device comprised of fewer parts than the two individual devices known from the prior art.

Advantageous embodiments of the method according to the invention are described in the subclaims 2 to 7, while advantageous embodiments of the combined device according to the invention are described in the subclaims 9 to 14.

In the embodiment of the method according to claim 2, a base part of the combined device is previously mounted on the carrier element. This may be done simultaneously with the mounting of similar parts for securing the pipes with which the tube has to be coupled. Only then the tube is fitted on the base part and the clamping part is mounted on the base part with the tube being clamped in-between at the position of the insertable portion of the tube connection organ.

In the method of claim 3, the base part and the clamping part are first fitted on the tube. This may be carried out elsewhere, for example, already at the site of the manufacturer who supplies the tubes. Subsequently the base part is mounted on the carrier element in order to fix the tube in relation to the carrier element.

In the method according to claim 4, when fitting the clamping part on the base part with the tube clamped in-between, the base part also is simultaneously mounted on the carrier element. Thus in this embodiment, the actions of clampingly connecting the tube with the tube connection organ such as to be fluidtight, and of fixing the tube on a carrier element, are carried out in one operation. The advantage of the embodiment of the method according to claim 5 is that by fitting the tube in the combined device, the intermating resulting from the close fit between the tube connection organ and parts of the combined device at the same time safeguards the tube against forces exerted on the tube in the axial direction. No extra components are required for this and no extra operations need to be carried out.

The advantage of the embodiment of claim 6 is, that once the tube is clamped around the tube connection organ and fixed on the carrier element, no additional coupling is required between the tube and the pipe.

The objective of the embodiment according to claim 7 is also to combine the operations of clamping the tube around the tube connection organ and to secure the tube on the carrier element, with the operation of coupling the tube with the pipe. The pipe connection organ and the tube connection organ are then embodied such that when the clamping part of the combined device according to the invention is moved in relation to the base part for clamping the tube connection organ in the tube, the tube connection organ and the pipe connection organ are simultaneously clamped together to render them fluidtight. In this mariner three actions are carried out in one operation, viz, clamping the tube connection organ in the tube such as to be fluidtight, mounting the tube on the carrier element, and realizing a fluidtight coupling between the tube and the pipe.

The embodiment of the combined device according to claim 9, comprises only few parts. It is, however, necessary for the design of the base part and that of the clamping part as well as of the profile therein, to be properly adapted to the dimensions of the tube connection organ and the tube, as well as to the material of the tube. The clamping means may be comprised, for example, of screws and bolts.

The embodiment of the combined device according to claim 10, allows the tube to be clamped around the tube connection organ the moment the clamping part is mounted on the base part and the base part on the carrier element. This may be done by means of screws or bolts which are inserted through openings of the clamping part and the base part and which are screwed down in the screw holes provided in the carrier element. Claim 11 is intended to prevent adverse distribution of stress when the tube is clamped around the tube connection organ and to avoid possible damage of the tube. The sleeve part may, for example, be a relatively easily deformable metal sleeve, which previously is pushed fitting closely over the end of the tube.

The embodiment of the combined device according to claim 12 safeguards the tube against axial displacement by means of the locking portions provided on the tube connection organ and on the base part and/or the clamping part. This allows proper locking in the axial direction without causing undue stress on the clamp connection between the clamping part and the base part.

A further embodiment described in claim 13, is suitable to ensure that when the clamping part is mounted on the base part, the coupling between the tube and the pipe will be fluidtight. A possible embodiment for this is described in claim 14. In this embodiment the intermating between sloping surfaces of the combined device and parts of the tube connection organ and the pipe connection organ produces a clamping force in axial direction which is utilized to effectuate the fluidtight seal between the tube and the pipe.

Purely for the sake of better understanding and without limiting the invention, the invention will now be elucidated with reference to some possible embodiments, which are illustrated in the drawings, in which:
Figure 1, is a partially cross-sectional side view of a tube mounted with the aid of a combined device according to the invention on a carrier element and-for the sake of clarity shown at some axial distance thereto-an end of a pipe to be coupled therewith, in this case a metal pipe,
Figure 2 is a schematic view in perspective of an embodiment of the combined device according to the invention comprising a clamping part and a separate base part,
Figure 3 is a combined device similar to that of Figure 2, in which the base part is mounted on a base plate and the clamping part is pivotingly connected with the base part,
Figure 4, is a view in perspective of an embodiment of a combined device according to the invention in which the tube clamping device comprises a band-like tube clamp of a type known as such, and which is connected with a strip-like base part for mounting the combined device on a carrier element,
Figure 5 is a cross section of a tube and the pipe coupled together at the combined device according to the invention, wherein the tube connection organ is previously soldered to a metal pipe and wherein further a safeguard is provided to avoid axial stress being exerted on the tube and the pipe, by means of closely fitting intermating parts of the tube connection organ and the combined device and
Figure 6, shows a cross section of an embodiment according to the invention in which by clamping the clamping part on the base part of the combined device, the tube is at the same time coupled with the pipe such as to be fluidtight.

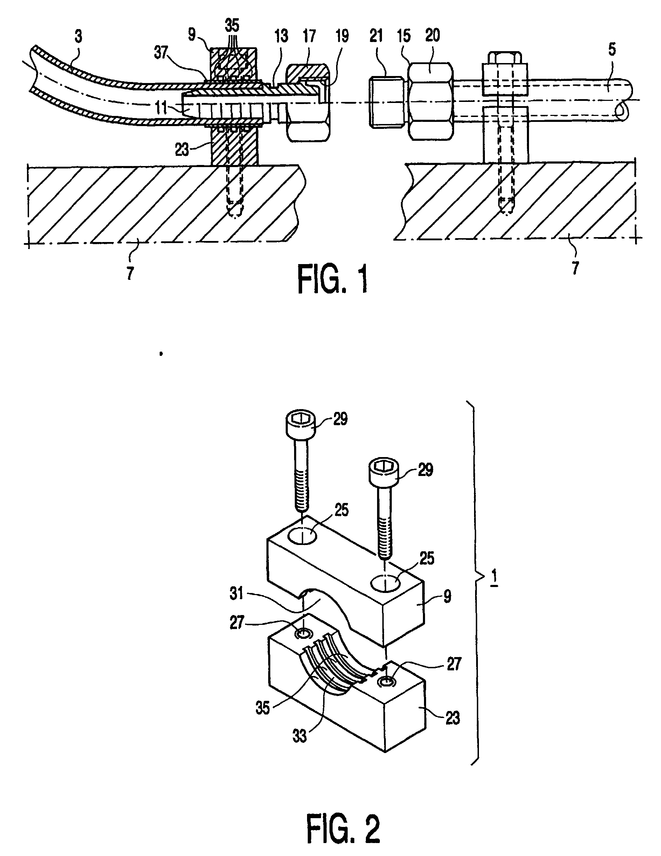

Figures 1 and 2 show a combined device 1 according to the method for the fluidtight connection of a flexible tube 3 with a pipe 5 and for mounting the tube 3 on a carrier element 7 such as a part of a machine, a cable channel, a structural beam, or the like. This carrier element 7 is partly shown as a dotted line to allow the illustration of the tube 3 and the pipe 5 in the uncoupled condition at some distance from each other.

The combined device comprises a tube connection organ having a movable clamping part 9, and is capable of receiving a free end of the tube 3. The insertable portion 11 is inserted into this free end of a tube connection organ (indicated by the general reference number 13. The tube connection organ serves for the connection to a pipe connection organ 15 of a pipe 5. For the fluidtight coupling between the tube 3 and the pipe 5, the tube connection organ (being of a conventional type) is provided with a coupling nut 17 with internal screw thread 19. The pipe connection organ 15 is provided with a swivel 20, with external screw thread 23, which can be screwed into the internal screw thread 19 of the coupling nut 17. The means responsible for a fluidtight connection in the coupling are of no essential importance to the invention and are not shown in the drawing.

The clamping part 9 is movable in relation to a base part 23. The clamping part 9 is provided with openings 25 and the base part 23 is provided with openings 27. Apart from the clamping part 9 and the base part 23, the tube clamping device also comprises two screw bolts 29, by means of which the clamping part 9 can be moved towards the base part 23. To facilitate the insertion of the tube 3 into the clamping part 9, the same is provided with a roughly semicircular recess 31 and the base part 23 is provided with a corresponding similarly shaped recess 33. After the insertable portion 11 of the tube connection organ 13 has been inserted into the end of the tube 3, preferably with some elastic deformation of the tube 3, the tube is fitted between the clamping part and the base part 23 at a position radially outward in relation to the insertable portion 11, after which the same are clamped together by means of the bolts 29, to provide a fluidtight clamping of the tube 3 between the insertable portion 11 and the tube clamping device 1.

At the same time the combined device 1 forms a mounting device for mounting the tube 3 on the carrier element 7. To this end the base part 23 is mounted on the carrier element 7 by inserting the bolts 29 through the openings 27 of the base part 23 and screwing the same into the relevant screw holes of the carrier element 7, simultaneously moving the clamping part 9 in the direction of the base part 23 thereby clamping the tube 3, forming a fluidtight seal between the tube 3 and the insertable portion 11 of the tube connection organ 13.

The base part 23, is shaped like a mounting saddle, and is provided at the inside with a profile consisting of a plurality of ridges 35 of a semicircular cross section to facilitate intermating with the external surface of the tube 3. The clamping part 9 is shaped like a bridge portion that can be positioned over the mounting saddle 23 and that is also provided with a corresponding profile; for the sake of simplicity, this is in the drawing not indicated by a reference number. By means of the clamping parts in the form of bolts 29, the bridge portion is moved toward the mounting saddle 23, as already discussed previously.

The combined device 1 illustrated in Figures 1 and 2 provides a combined clamp/mounting device for simultaneously moving the clamping part 9 toward the base part 23 and mounting the base part 23 on the carrier element 7.

To avoid damaging the tube 3 and to better distribute the clamping forces, a sleeve 37 is provided around the outer circumference of the tube between the clamping part 9 and the base part 27, made of relatively easily deformable metal. The sleeve may be smooth or may be provided with a suitable profile.

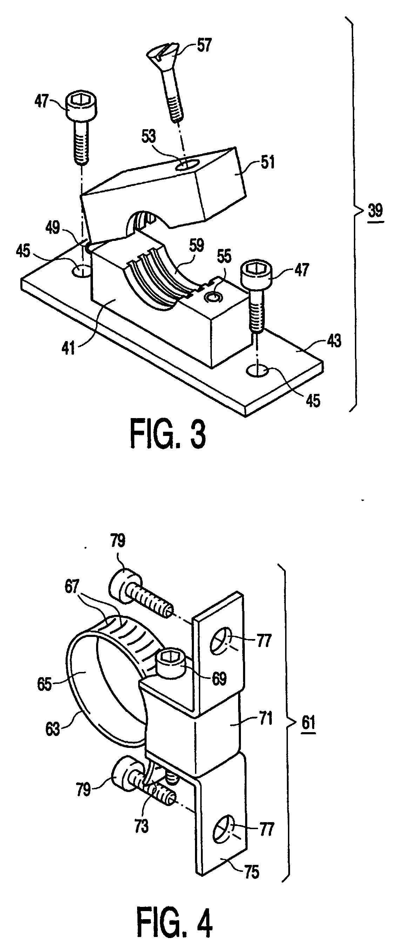

Figure 3 shows another embodiment of a combined device 39 according to the invention. Said device resembles the device 1 in Figure 2, however the base part 41 is mounted on a base plate 43 of larger dimensions, provided with openings 45 for fastening the base plate to the carrier element 7, with the aid of bolts 47. The clamping part 51 is coupled with the base part 41 by means of an integrated hinge extending along the side. The base part 41 and the clamping part 51 together with the film hinge 49 are made of a suitable plastic. The clamping part 51 is provided with an opening 53 and the base part 41 is provided with a corresponding opening 55, which is provided with an internal screw thread. By means of a screw 57 which is inserted through the opening 53 of the clamping part 51 and which can be screwed into the threaded opening 55, after the end of a tube has been positioned in the semicircular recess of the base part 41, the clamping part 51 is clampingly moved in the direction of the base part 41 by tightening the screw 57. The entire combined device 39 may be mounted beforehand on a carrier element by means of the bolts 47. The base plate 43 may be made of metal or another suitable material and may optionally be formed integrally with the plastic base part 41 and the clamping part 51.

Figure 4, shows a combined device 61, which is particularly suitable to be first clamped around the end of a tube at the insertable portion of a tube connection organ, and subsequently to the mounted on a carrier element. This embodiment may be considered as a modification of a conventional tube clamp 63. The tube clamp comprises a clamping band 65 which is provided with indentations 67 which can intermate with the thread of a bolt 69 which is provided such as to be freely turnable in a housing 71. The free end 73 of the band 65 is inserted into the housing 71. When tightening the screw 69 the intermating indentations 67 and thread of the bolt 69 cause the free end 73 to be transported outward through the housing, thereby reducing the diameter of the tube clamp and thus clamping the tube. Connected with the housing 71 is a bracket 75, provided with openings 77 for separate bolts 79. The bottom side of the bracket 75 is substantially flat or may have another form, such as for example, a part of a circle for adapting to the carrier element on which the combined device is to be mounted. This mounting is realized by means of the bolts 79 which are inserted through the openings 77 and screwed into the carrier element, or which are inserted through these to be fastened by means of screwed-on nuts.

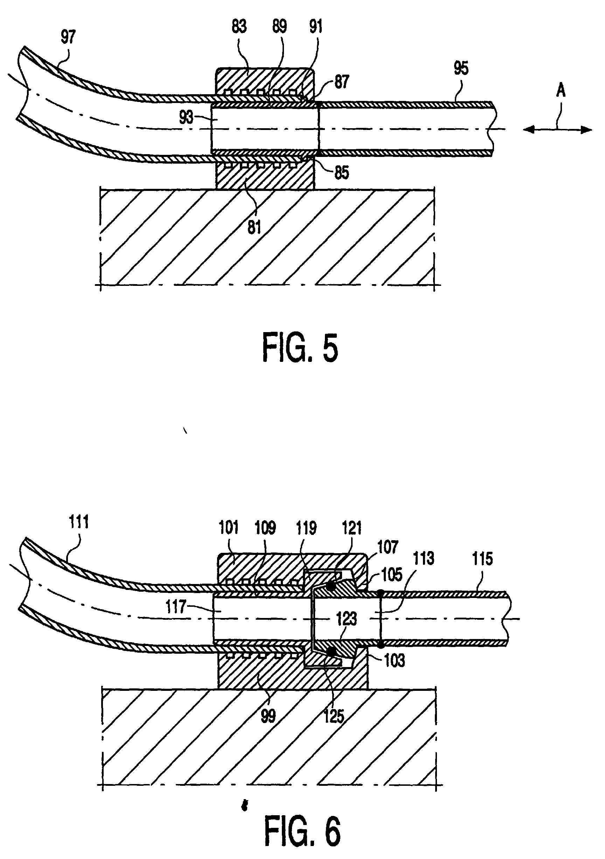

Figure 5 shows schematically and in cross section a combined device of a type corresponding, for example, with that in the Figures 1, 2 or 3. The base part 81 and the clamping part 83 are provided with locking portions 85 and 87, respectively. These intermate with the tube connection organ 89 to safeguard against displacement in the axial direction indicated by the double arrow A. The locking portions 85 and 87 interact with a projection 91 formed integrally with the tube connection organ 89 and serving as locking portion, and positioned at the side of the insertable portion 93 of the tube connection organ 89 and also at the side of the said locking portions 85 and 87 of the base part 81 and the clamping part 83. A special feature of this embodiment is that the tube connection organ is previously soldered to a metal pipe 95, so that no further separate coupling elements are required for effectuating the fluidtight coupling between the tube 97 and the pipe 95.

Figure 6 shows a base part 99 and a clamping part 101 similar to that shown in Figure 5, i.e. comprising locking portions 103 and 105, but now provided with a chamber 107 enclosed between the base part 99 and the clamping part 101. The connection organ 109 inserted into the end of tube 111 is connected in the chamber 107 with the tube connection organ 113 soldered to the end of the pipe 115. Abutting to the insertable portion 117 of the tube connection organ 109 at the side of the end of the tube 111 is a portion 119 having an enlarged diameter. The outside diameter of this enlarged portion is larger than the outside diameter of the tube 111, allowing the enlarged portion 119 to intermate with the radially extending walls of the chamber 107. At one end, the portion 119 of enlarged diameter is provided with an internal chamber 121, which is shaped like a truncated cone. The pipe connection part 113 is at one end provided with a correspondingly shaped conical end 123 that fits into the conical recess 121. In an annular chamber in a groove provided in the perimeter of the end 123 of the pipe connection organ an 0-ring 125 is provided.

The combined device shown in Figure 6, is also capable of realizing a fluidtight coupling between the pipe connection organ 113 of the pipe 115 and the tube connection organ 109 of the tube 111. Both the base part 99 and the clamping part 101 are provided with parts for receiving, and for intermating with, the conical end 123 of the pipe connection organ 113, so that moving the clamping part 101 toward the base part 99 also brings about the fluidtight coupling with the pipe connection organ 113. The parts for receiving the pipe connection organ are formed by the parts of the base part 99 and the clamping part 101, which together form the chamber 107. The parts for intermating with the pipe connection organ when moving the clamping part 101 toward the base part 99, are comprised of the parts 103 and 105 of the base part and clamping part, simultaneously serving as locking portions. The sides of the locking portions 103, and 105 facing toward the interior of the chamber 107, form slightly angled clamping surfaces which, when the clamping part 101 clamps onto the tube 111, intermate with the portions of the conical end 123 of the pipe connection element 113 such that the end 123 in Figure 6 is moved axially to the left, so that its 0-ring 125 fits tightly against the interior wall of the conical cavity 121 in the portion 119 of the enlarged diameter of the tube connection organ 109, whereby the axial movement causes the portion of enlarged diameter 119 to abut against the wall of the chamber 107 located opposite the angled portions at the interior of the chamber 107 on the locking portions 103 and 105. In this manner the tube connection organ 109 and the pipe connection organ 113 are axially pressed together with the 0-ring 125 being clamped between them, thus providing a fluidtight coupling between the tube 111 and the pipe 115.

In the above the invention is elucidated with reference to a few possible embodiments, however, the invention is in no way limited to these embodiments; on the contrary, it encompasses any possible embodiment within the scope of the appended independent claims 1 and 8. For example, a combined device may be used which previously has been mounted in its entirety on a carrier element, after which the tube is inserted through the combined device, subsequently to which the clamping part is moved toward the base part to reduce the opening therebetween. Another possibility is to use base parts and/or clamping parts comprising a plurality of parts made, for example, of different materials. Apart from using bolts and screws to move the clamping part toward the base part, said parts may also be made to meet in other ways, for example, by means of intermating hook-like parts of the clamping part which subsequent to a resilient deformation of the clamping part will engage corresponding hook-like parts of the base part. The person skilled in the art will be able to think of many more details to solve the problem, all within the scope of the present invention.

## Claims

1. A method for the fluidtight connection of a flexible tube with a pipe and for the fastening of the tube and/or the pipe on a carrier element such as a part of a machine, a cable channel, a structural beam, or the like, comprising
• the insertion into the tube of an insertable portion of a tube connection organ into a free end of the tube,
• the placing of a tube clamping device around the free end of the tube at a position diametrically outward in relation to the insertable portion,
• the clamping of the tube clamping device such that the tube is clamped to be fluidtight between the tube connection organ and the tube clamping device,
• the coupling of the tube connection organ with the pipe and
• the mounting of the tube on the carrier element by means of a suitable mounting device,
**characterized**
• in that said tube clamping device together with said mounting device forms a combined device having a base part and a clamping part movable in relation thereto,
• in that the base part of the combined device is mounted on the carrier element,
• in that the tube is placed on the base part at a position diametrically outward in relation to the previously inserted insertable portion of the tube connection organ, and
• in that the clamping part is moved in relation to the base part such that the combined device is clamped around the tube to clamp the tube between the insertable portion of the tube connection organ and the clamping part such as to be fluidtight.

2. A method according to claim 1,
**Characterized**
• in that first the base part of the combined device is mounted on the carrier element,
• in that subsequently the tube is placed on the base part at a position diametrically outward in relation to the previously inserted insertable portion of the tube connection organ, and
• in that subsequently the clamping part is moved in relation to the base part, thereby clamping the combined device around the tube to clamp the tube the between the insertable portion of the tube connection organ and the clamping part such as to be fluidtight.

3. A method according to claim 1,
**characterized**
• in that first the tube is placed on the base part at a position diametrically outward in relation to the previously inserted insertable portion of the tube connection organ,
• in that subsequently the clamping part is moved in relation to the base part, thereby clamping the combined device around the tube to clamp the tube between the insertable portion of the tube connection organ and the clamping part such as to be fluidtight, and
• in that subsequently the base part of the combined device is mounted on the carrier element.

4. A method according to claim 1,
**characterized**
• in that first the tube near its free end is placed on the base part at a position diametrically outward in relation to the previously inserted insertable portion of the tube connection organ, and
• in that subsequently the clamping part is moved in relation to the base part and thereby the combined device is clamped around the tube to clamp the tube between the insertable portion of the tube connection organ and the clamping part such as to be fluidtight, while simultaneously mounting the base part of the combined device on the carrier element.

5. A method according to claim 1,
**characterized**
• in that the tube connection organ in the combined device is safeguarded against displacement in axial direction by interaction between locking portions present on the tube connection organ at a position at the side of said insertable
• portion on one hand, and parts of the base part and/or the clamping part on the other hand.

6. A method according to one of the preceding claims,
**characterized**
• in that the tube connection organ is previously soldered to the end of a pipe to be connected.

7. A method according to claim 1,
**characterized**
• in that a pipe connection organ of the pipe is connected with the pipe such as to be fluidtight, and subsequently a fluidtight coupling is realized with the tube connection organ of the tube,
• in that the combined device is also capable of realizing said coupling,
• in that the pipe connection organ with the tube is placed on said base part, and
• in that when moving the clamping part in relation to the base part, the fluidtight coupling with the pipe connection organ is realized by means of the fluidtight clamping of the pipe connection organ of the pipe in relation to the tube connection organ of the tube.

8. A combined device for the fluidtight connection according to the method of claim 1 of a flexible tube with a pipe and the mounting of the tube on a carrier element such as a part of a machine, a cable channel, a structural beam, or the like, which combined device comprises:
• a tube clamping device having a movable clamping part, which tube clamping device is capable of receiving a free end of a tube, into which an insertion portion of a tube connection organ has been inserted serving for the connection with a pipe connection organ of a pipe, clamping the tube around the outside of the tube at a position diametrically outward in relation to the insertable portion for clamping the tube between the insertable portion and the tube clamping device such as to be fluidtight, and
• a mounting device for mounting the tube on the carrier element, comprising a base part to be mounted on the carrier element,
**characterized**
• in that the tube clamping device forms a combined device with the mounting device, having a base part for mounting on the carrier element and a clamping part movable in relation thereto.

9. A combined device according to claim 8,
**characterized**
• in that the base part comprises a mounting saddle having a profile at the inside for intermating with the exterior surface of the tube,
• in that the clamping part comprises a bridge part to be placed over the mounting saddle containing a tube, which is also provided at the inside with a profile for intermating with the exterior surface of the tube, and
• in that clamping means are provided for moving the bridge part toward the saddle part.

10. A combined device according to claim 8 or 9,
**characterized**
• in that the combined device comprises combined clamping/mounting means for simultaneously moving the clamping part toward the base part and mounting the base part on the carrier element.

11. A combined device according to claim 8,
**characterized**
• in that the combined device further comprises a sleeve part made of deformable material for placing around the outer circumference of the tube at the position of said free end between the clamping part and the base part.

12. A combined device according to claim 8,
**characterized**
• in that the base part and/or the clamping part of the combined device comprise locking portions that intermate with a tube connection organ to safeguard against displacement in axial direction, by means of interaction between locking portions present on the tube connection organ at a position at the side of said insertable portion on the one hand, and said locking portions of the base part and/or the clamping part on the other hand.

13. A combined device according to claim 8,
**characterized**
• in that the combined device is also capable of realizing a fluidtight coupling between a pipe connection organ of a pipe and a tube connection organ of the tube,
• in that the base part and/or the clamping part are/is provided with parts for receiving, and for intermating with parts of the pipe connection organ which, when moved from the clamping part toward the base part, also realize the fluidtight coupling with the pipe connection organ by clamping said portions of the pipe connection organ to corresponding portions of the tube connection organ such as to be fluidtight.

14. A combined device according to claim 13,
**characterized**
• in that the pipe connection organ and the tube connection organ are provided with sealing parts which, in the mounted condition, are positioned in the interior of the combined device, facing each other, and which under axial clamping pressure intermate such as to be fluidtight,
• in that the base part and the clamping part are provided with clamping surfaces inclined at a slight angle in relation to the direction of mounting of the clamping part, which clamping surfaces, when clamping the clamping part on the tube, intermate with the tube connection organ and the pipe connection organ, such as to press them together in axial direction.
